(19) Europäisches Patentamt
European Patent Office
Office européen des brevets

(11) **EP 4 589 727 A1**

(12) **EUROPEAN PATENT APPLICATION**

(43) Date of publication:
**23.07.2025 Bulletin 2025/30**

(21) Application number: **24197041.7**

(22) Date of filing: **28.08.2024**

(51) International Patent Classification (IPC):
*H01M 10/60* (2014.01)       *H01M 10/61* (2014.01)
*H01M 10/653* (2014.01)       *H01M 10/655* (2014.01)
*H01M 10/6557* (2014.01)      *H01M 10/613* (2014.01)
*H01M 50/204* (2021.01)       *H01M 50/209* (2021.01)

(52) Cooperative Patent Classification (CPC):
H01M 10/60; H01M 10/61; H01M 10/613;
H01M 10/653; H01M 10/655; H01M 10/6557;
H01M 50/204; H01M 50/209; H01M 2200/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.01.2024 KR 20240008596**

(71) Applicant: **SAMSUNG SDI CO., LTD.
Giheung-gu
Yongin-si, Gyeonggi-do
17084 (KR)**

(72) Inventors:
• **KIM, Jin Beom**
  **16678 Suwon-si (KR)**
• **IN, Dong Seok**
  **16678 Suwon-si (KR)**

(74) Representative: **Marks & Clerk LLP
15 Fetter Lane
London EC4A 1BW (GB)**

(54) **ENERGY STORAGE SYSTEM**

(57)     An energy storage system configured to allow smooth air circulation in normal operating conditions and to prevent the spread of smoke and a fire in the event of a fire. The energy storage system includes a container, accommodation portions inside the container and individually accommodating a battery rack or an air conditioner, a partition between adjacent accommodation portions, a ventilation hole passing through the partition and connecting the adjacent accommodation portions, and a blocking member configured to block a flame or smoke generated in one of the adjacent accommodation portions from passing through the ventilation hole.

FIG. 1

**EP 4 589 727 A1**

**Description**

**BACKGROUND**

**1. Field**

Aspects of embodiments of the present disclosure relate to an energy storage system.

**2. Discussion of Related Art**

Generally, an energy storage system (ESS) is a device that can store surplus electricity or store electricity produced using renewable energy. An ESS may be configured by installing a plurality of battery modules in racks and accommodating a plurality of the racks in a container. A battery module may be constructed by assembling a plurality of secondary batteries, which are electrically connected to each other, in various structures.

In such an ESS, in the event of a fire due to thermal runaway that occurs during the charging and discharging process of secondary batteries or other electrical defects in the secondary batteries, there is a risk that all components inside a container may be exposed to the fire and be burned completely or otherwise damaged by the fire. In order to prevent the above risk, fire prevention compartments may be built by erecting an impermeable firewall in the middle of the container. However, in this case, separate air conditioning equipment is required for each compartment, which increases costs and is disadvantageous in terms of battery energy density.

The above-described information disclosed in the technology that forms the background of the present disclosure is only intended to improve understanding of the background of the present disclosure, and thus may include information that does not constitute the related art.

**SUMMARY**

An aspect of embodiments of the present disclosure relates to an energy storage system configured to allow smooth air circulation in normal operating conditions and to prevent the spread of a fire in the event of a fire.

These and other aspects and features of the present disclosure will be described in or will be apparent from the following description of some embodiments of the present disclosure.

According to an aspect of the present disclosure, an energy storage system includes a container, a plurality of accommodation portions inside the container, each of the plurality of accommodation portions accommodating or configured to accommodate a battery rack or an air conditioner, a partition between adjacent accommodation portions of the plurality of accommodation portions, a ventilation hole passing through the partition and connecting the adjacent accommodation portions, and a blocking member configured to block a flame or smoke generated in one of the adjacent accommodation portions from passing through the ventilation hole.

The blocking member may include at least one louver extending from the partition and facing the ventilation hole.

The at least one louver may be inclined with respect to the partition.

The at least one louver may extend upwardly from a lower side of the ventilation hole and a distance from the at least one louver to the ventilation hole may increase toward an end portion of the at least one louver.

The blocking member may include a blocking body fixed to the partition and including a plurality of mesh holes connected to the ventilation hole, and a coating layer on a surface of the blocking body, the coating layer being configured to expand in response to being heated to a set temperature or higher and to close the plurality of mesh holes.

The coating layer may surround perimeters of the plurality of mesh holes.

A width of one or more mesh holes of the plurality of mesh holes may satisfy Expression 1 below:

Expression 1

$$L \leq t \times \alpha \times 2$$

in which L denotes the width of the mesh hole, t denotes a thickness of the coating layer, and a denotes a minimum expansion rate of the coating layer.

The blocking member may include a damper member rotatably connected to the partition, the damper member configured to close the ventilation hole by being rotated in a first direction, and an adjustment member connected to the damper member and configured to selectively allow the damper member to be rotated in the first direction in response to temperature changes.

The adjustment member may include a rod connected to the damper member and configured to apply a rotational force to the damper member in the first direction, and a rope connected to the container and the rod, the rope being configured to apply a rotational force to the damper member in a direction opposite to the first direction, and wherein the rope may be configured to be cut in response to the rope being heated to a set temperature or higher.

The rope may be above the accommodation portion.

The rope may pass through the rod and both sides of the rope may be inside the accommodation portions.

The partition may include a plurality of partitions and the blocking member may include a plurality of blocking members, and the ropes provided in different blocking members may be connected to each other.

The damper member may include two or more dampers arranged in a longitudinal direction of the rod, and a sum of areas of the dampers may be greater than an area of the ventilation hole.

The blocking member may include a movable partition facing the partition and movably installed between a first position and a second position, a movable hole passing through the movable partition and facing the ventilation hole in response to the movable partition being positioned in the first position, and a rope configured to allow the movable partition to be positioned in the first position and configured to selectively allow the movable partition to be moved from the first position to the second position in response to temperature changes.

The rope may be connected to the container and the movable partition and configured to be cut in response to the rope being heated to a set temperature or higher.

The rope may be above the accommodation portion.

The rope may pass through the movable partition and both sides of the rope may be inside the adjacent accommodation portions.

The partition may include a plurality of partitions and the blocking member may include a plurality of blocking members, and the ropes provided in different blocking members may be connected to each other.

The blocking member may further include a guide rail configured to guide movement of the movable partition.

The guide rail may include a guide body fixed to the container, a first extension portion that extends from the guide body and faces the partition, and a second extension portion that extends from the guide body and faces the movable partition.

At least some of the above and other features of the invention are set out in the claims.

## BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:

FIG. 1 is a perspective view schematically illustrating a configuration of an energy storage system according to a first embodiment of the present disclosure;

FIG. 2 is a front view schematically illustrating the configuration of the energy storage system according to the first embodiment of the present disclosure;

FIG. 3 is a perspective view schematically illustrating a configuration of a blocking member according to the first embodiment of the present disclosure;

FIG. 4 is a perspective view illustrating the configuration of the blocking member according to the first embodiment of the present disclosure from a different viewpoint from FIG. 3;

FIGS. 5 and 6 are views schematically illustrating an operation process of the energy storage system according to the first embodiment of the present disclosure;

FIG. 7 is a perspective view schematically illustrating a configuration of an energy storage system according to a second embodiment of the present disclosure;

FIG. 8 is a front view schematically illustrating the configuration of the energy storage system according to the second embodiment of the present disclosure;

FIG. 9 is a perspective view schematically illustrating a configuration of a blocking member according to the second embodiment of the present disclosure;

FIG. 10 is an enlarged view schematically illustrating the configuration of the blocking member according to the second embodiment of the present disclosure;

FIGS. 11 and 12 are views schematically illustrating an operation process of the energy storage system according to the second embodiment of the present disclosure;

FIG. 13 is a perspective view schematically illustrating a configuration of an energy storage system according to a third embodiment of the present disclosure;

FIG. 14 is a front view schematically illustrating the configuration of the energy storage system according to the third embodiment of the present disclosure;

FIG. 15 is a plan view schematically illustrating the configuration of the energy storage system according to the third embodiment of the present disclosure;

FIG. 16 is a perspective view schematically illustrating a configuration of a blocking member according to the third embodiment of the present disclosure;

FIG. 17 is a perspective view illustrating a state in which a ventilation hole is closed by the blocking member of FIG. 16;

FIGS. 18 and 19 are views schematically illustrating an operation process of the energy storage system according to the third embodiment of the present disclosure;

FIG. 20 is a perspective view schematically illustrating a configuration of an energy storage system according to a fourth embodiment of the present disclosure;

FIG. 21 is a front view schematically illustrating the configuration of the energy storage system according to the fourth embodiment of the present disclosure;

FIG. 22 is a plan view schematically illustrating the configuration of the energy storage system according to the fourth embodiment of the present disclosure;

FIG. 23 is a perspective view schematically illustrating a state in which a movable partition according to the fourth embodiment of the present disclosure is disposed in a first position;

FIG. 24 is a perspective view schematically illustrating a state in which the movable partition according to the fourth embodiment of the present disclosure is disposed in a second position;

FIG. 25 is an enlarged view schematically illustrating a configuration of a guide rail according to the fourth embodiment of the present disclosure;

FIG. 26 is a cross-sectional view schematically illustrating the configuration of the guide rail according to the fourth embodiment of the present disclosure; and

FIGS. 27 and 28 are views schematically illustrating an operation process of the energy storage system according to the fourth embodiment of the present disclosure.

## DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as having a meaning consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

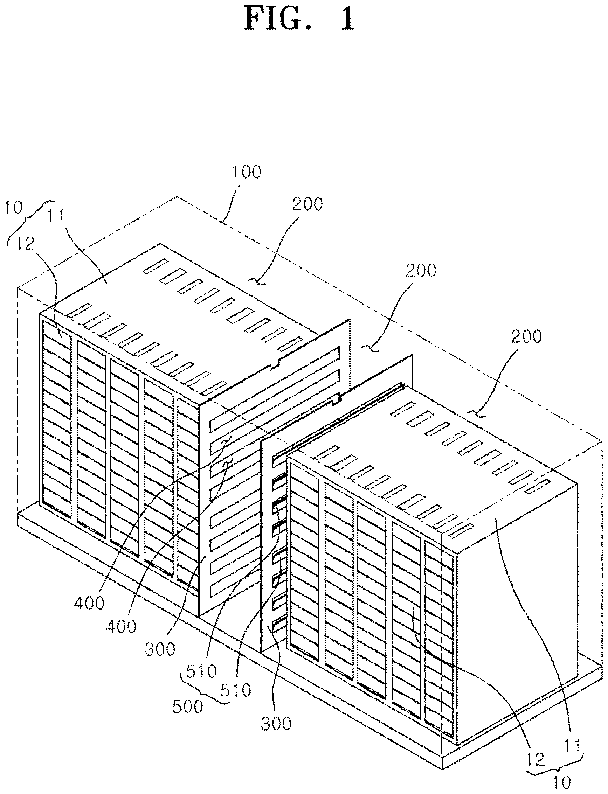

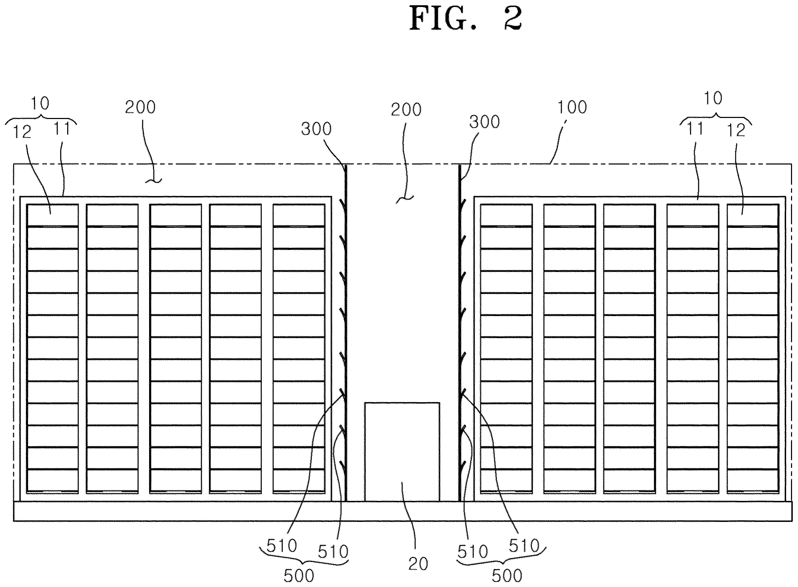

FIG. 1 is a perspective view schematically illustrating a configuration of an energy storage system according to a first embodiment of the present disclosure, and FIG. 2 is a front view schematically illustrating the configuration of the energy storage system according to the first embodiment of the present disclosure.

Referring to FIGS. 1 and 2, the energy storage system according to the present embodiment includes a container 100, an accommodation portion 200, a partition 300, at least one ventilation hole 400, and at least one blocking member 500.

The container 100 may form the outer appearance of the energy storage system. Examples of the container 100 may include various types of closed structures with an empty inside, such as a stand-alone building, a room within a building, a container, e.g. shipping container, and the like. The container 100 may be any suitable shape, such as a polyhedral shape, a circular shape, and the like, in addition to a rectangular parallelepiped shape illustrated in FIG. 1.

Examples of the accommodation portion 200 may include an empty space inside the container 100. The accommodation portion 200 may be a plurality of accommodation portions 200. FIGS. 1 and 2 illustrate an embodiment in which three accommodation portions 200 are formed inside the container 100, but the number of accommodation portions 200 is not limited thereto, and the number of accommodation portions 200 may be any other suitable number, such as two, four, or the like.

The respective accommodation portions 200 may be located in different positions inside the container 100. In the embodiment illustrated in FIGS. 1 and 2, the plurality of accommodation portions 200 may be arranged in a row inside the container 100. In one or more embodiments, the plurality of accommodation portions 200 may be arranged in a lattice shape or stacked vertically inside the container 100. The shapes and/or volumes of the respective accommodation portions 200 may be the same or different from each other.

Each accommodation portion 200 may accommodate either a battery rack 10 or an air conditioner 20 therein.

The battery rack 10 may include a rack frame 11 with a plurality of storage spaces, and a plurality of battery modules 12 inside the storage spaces of the rack frame 11 and electrically connected to each other. The battery module 12 may include a plurality of battery cells that can store and/or discharge power.

The air conditioner 20 may be a blower device or a heating, ventilating, and air conditioning (HVAC) device that is configured to control a flow rate, temperature, and humidity of surrounding air.

The battery rack 10 and the air conditioner 20 may each be accommodated in any one pair of adjacent accommodation portions 200. In the embodiment illustrated in FIGS. 1 and 2, among the three accommodation portions 200 arranged in a row inside the container 100, the accommodation portion 200 in the center may accommodate the air conditioner 20, and the accommodation portions 200 on both sides (e.g., on opposite sides of the center accommodation portion 200) may each accommodate a battery rack 10. However, the arrangement of the battery rack 10 and the air conditioner 20 is not limited to thereto, and the design of the arrangement of the battery rack 10 and the air conditioner 20 may be modified into any other suitable configuration in which at least one of the battery rack 10 or the air conditioner 20 is accommodated in the plurality of accommodation portions 200.

The partition 300 is between a pair of adjacent accommodation portions 200 and partitions (e.g. divides or separates) the pair of adjacent accommodation portions 200 from each other. The partition 300 according to the present embodiment may have a substantially flat plate shape. The partition 300 may be parallel (or substantially parallel) to a boundary between the pair of adjacent accommodation portions 200. The partition 300 may be arranged so that both surfaces of the partition 300 face the pair of adjacent accommodation portions 200. An area of the partition 300 may be greater than an area of the boundary between the pair of adjacent accommodation portions 200. The partition 300 may be made of an incombustible and fire-resistant material such as concrete, ceramic, steel, or the like to prevent damage caused by a flame or the like in the event of a fire. The partition 300 may include a plurality of partitions 300. Each partition 300 may be individually arranged between any one pair of accommodation portions 200.

The one or more ventilation holes 400 pass through the partition 300 and both sides thereof connect with the adjacent accommodation portions 200. That is, each of the one or more ventilation holes 400 may function as a path through which the air can be transmitted from one of the pair of adjacent accommodation portions 200 to the other accommodation portion 200. Each of the ventilation holes 400 may have any suitable configuration in which the area of the ventilation hole 400 is smaller than the area of the partition 300. The at least one ventilation hole 400 may be a plurality of ventilation holes 400. The plurality of ventilation holes 400 may be spaced apart from each other on the partition 300. The plurality of ventilation holes 400 may be arranged in a row in a vertical direction, and may also be arranged in two or more rows.

The blocking member 500 is configured to block a flame or smoke generated in the accommodation portion 200 from passing through the ventilation holes 400. In one or more embodiments, the blocking member 500 may be configured to allow the air inside any one accommodation portion 200 to be transmitted to the accommodation portion 200 adjacent thereto through the ventilation holes 400 in normal operating conditions, and to block a flame or smoke generated in one accommodation portion 200 from being transmitted to the accommodation portions 200 adjacent thereto through the ventilation holes 400 in the event of a fire. The at least one blocking member 500 may be a plurality of blocking members 500. The plurality of blocking members 500 may be individually positioned in the ventilation holes 400 in each partition 300.

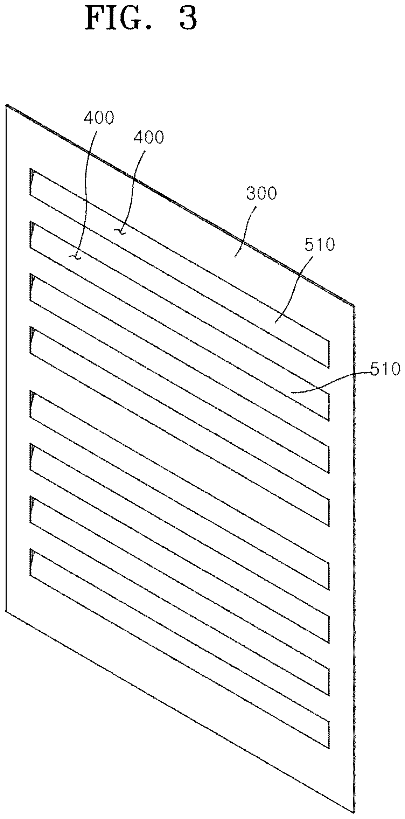

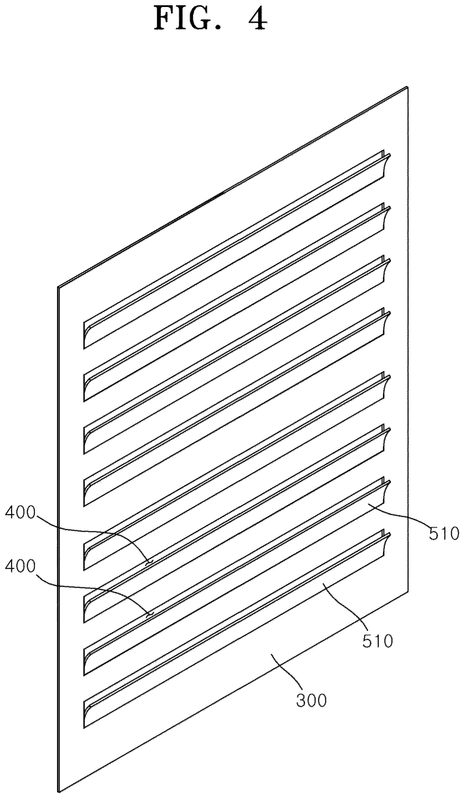

FIG. 3 is a perspective view schematically illustrating a configuration of a blocking member 500 according to the first embodiment of the present disclosure, and FIG. 4 is a perspective view illustrating the configuration of the blocking member 500 according to the first embodiment of the present disclosure from a different viewpoint from FIG. 3.

Referring to FIGS. 3 and 4, the blocking member 500 according to the present embodiment may include at least one louver 510 (e.g., a plurality of louvers 510).

The louver 510 extends from the partition 300 and faces the ventilation hole 400. The louver 510 according to the present embodiment may have the shape of a plate that extends from the partition 300 toward the accommodation portion 200 and whose inner surface faces the ventilation hole 400. The louver 510 may be made of the same material as the partition 300. The louver 510 may be inclined with respect to the partition 300. In the embodiment illustrated in FIGS. 3 and 4, the louver 510 may extend upward from a lower side of the ventilation hole 400 and may be configured (e.g., oriented) such that a distance from the louver 510 to the ventilation hole 400 increases toward an end portion of the louver 510. Accordingly, air with a relatively low viscosity may smoothly pass through the ventilation hole 400, and smoke with a relatively higher viscosity than the air and a flame (which moves in a straight direction and does not flow like air) may be blocked by an outer surface of the louver 510 and may not be introduced into the ventilation hole 400.

An area of the louver 510 may be greater than the area of the ventilation hole 400. Accordingly, the louver 510 may prevent (or at least mitigate) the flame or smoke from being directly introduced into the ventilation hole 400 without interfering with the outer surface of the louver 510.

In an embodiment in which the ventilation hole 400 includes a plurality of ventilation holes 400, the louver 510 may include a plurality of louvers 510. The plurality of louvers 510 may extend from different positions of the partition 300 and each may individually face one of the plurality of ventilation holes 400.

The louver 510 may extend toward the accommodation portion 200 in which the battery rack 10 is accommodated among the adjacent accommodation portions 200. FIGS. 3 and 4 illustrate an embodiment in which the battery rack 10 and the air conditioner 20 are each accommodated in the pair of adjacent accommodation portions 200 and the louver 510 is on or in only on one surface of the partition 300. However, when all the battery racks 10 are accommodated in the pair of adjacent accommodation portions 200, the louver 510 may be on both surfaces (opposite surfaces) of the partition 300.

Hereinafter, an operation of the energy storage system according to the first embodiment of the present disclosure will be described.

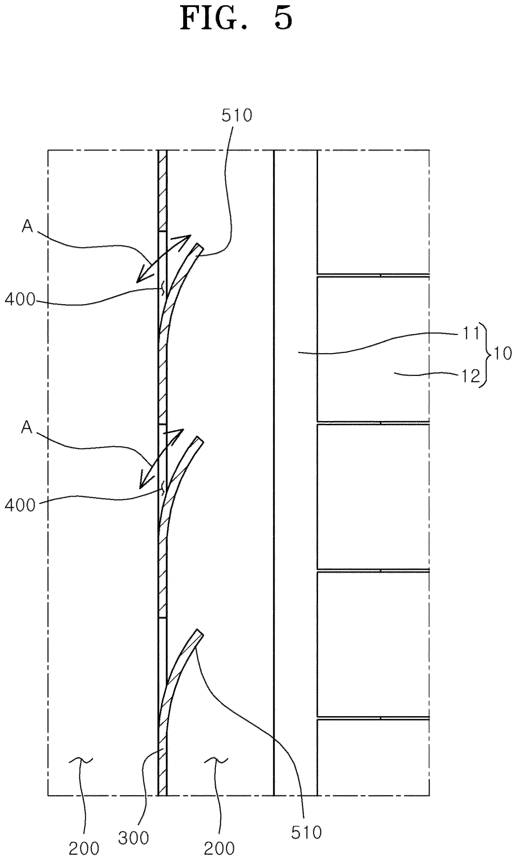

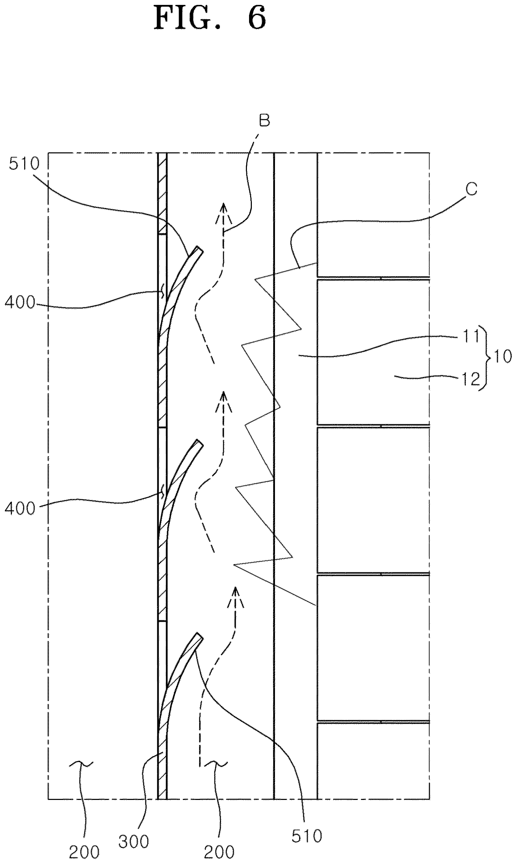

FIGS. 5 and 6 are views schematically illustrating an operation process of the energy storage system according to the first embodiment of the present disclosure.

When a fire does not occur, the air flowing inside any one accommodation portion 200 is transmitted to the inside of the accommodation portions 200 adjacent thereto through the ventilation holes 400 and circulates in the plurality of accommodation portions 200. In this process, the air conditioner 20 may continuously supply a flow force to the air circulating in the plurality of accommodation portions 200, and thus the circulation efficiency of the air may be further improved. Accordingly, the internal environmental conditions of the plurality of accommodation portions 200 may be maintained the same during normal operating conditions.

When a fire occurs in the battery rack 10 accommodated in any one accommodation portion 200, a flame C generated in a region adjacent to the partition 300 increases in size due to the continuous combustion, and comes into contact with the outer surface of the louver 510 when growing to a predetermined size or more.

Since the louver 510 faces the ventilation hole 400, the flame C in contact with the outer surface of the louver 510 may not be introduced into the ventilation hole 400 and thus the spread of fire through the ventilation hole 400 may be blocked (or at least mitigated).

Additionally, smoke B generated during the combustion process of the flame C comes into contact with the partition 300 and rises along the partition 300 due to a density difference with the air A.

The smoke B comes into contact with the outer surface of the louver 510 while rising along the partition 300.

Since the smoke B has a relatively higher viscosity than the air A, the smoke B is not introduced into the ventilation hole 400 through an inner surface of the louver 510, remains in contact with the outer surface of the louver 510, and continues to move upward. By repeatedly performing such an operation until the smoke B reaches an upper end portion of the partition 300, the spread of fire through the ventilation holes 400 may be blocked.

Hereinafter, a configuration of an energy storage system according to a second embodiment of the present disclosure will be described.

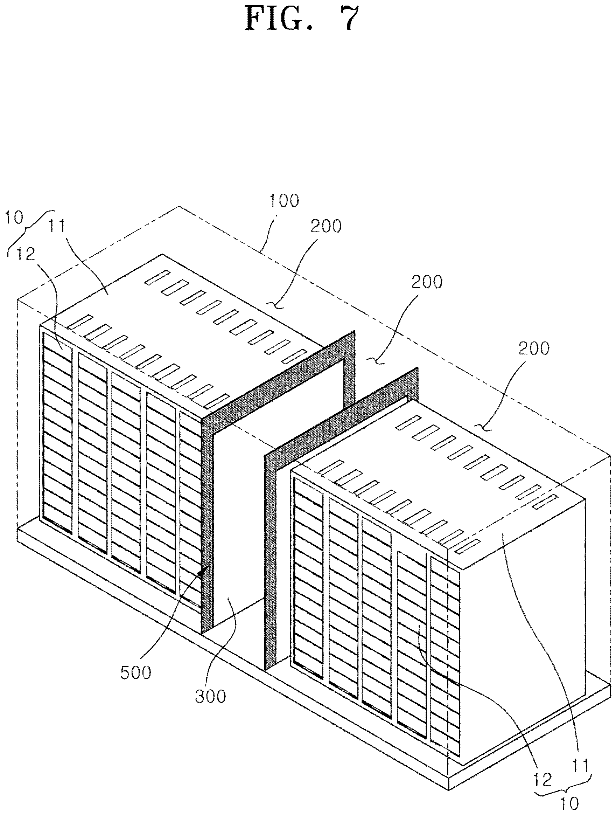

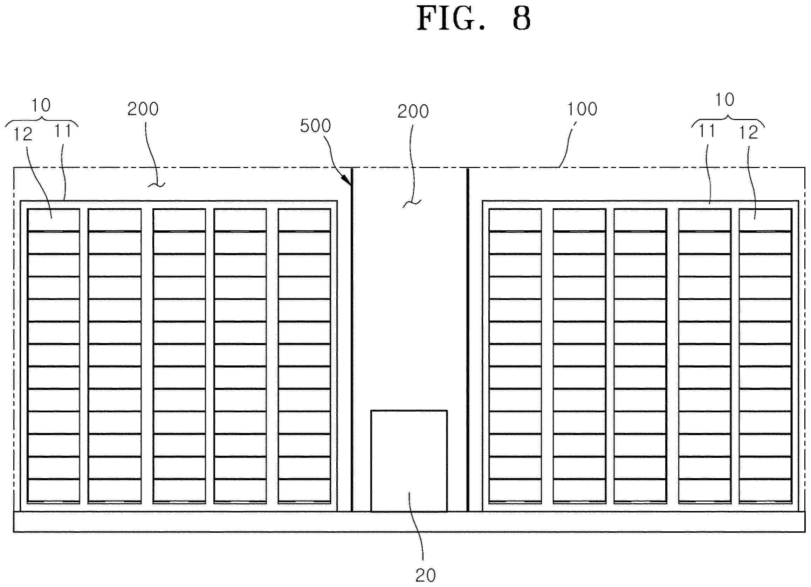

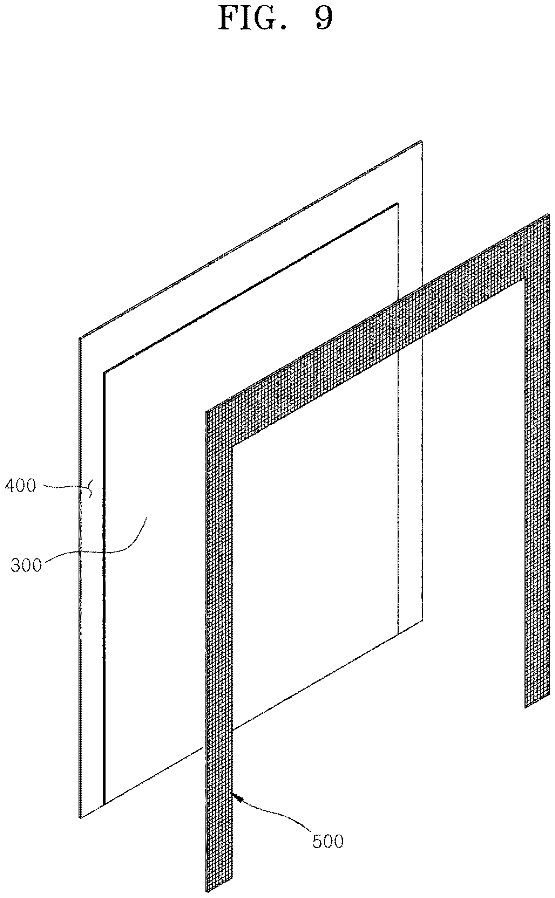

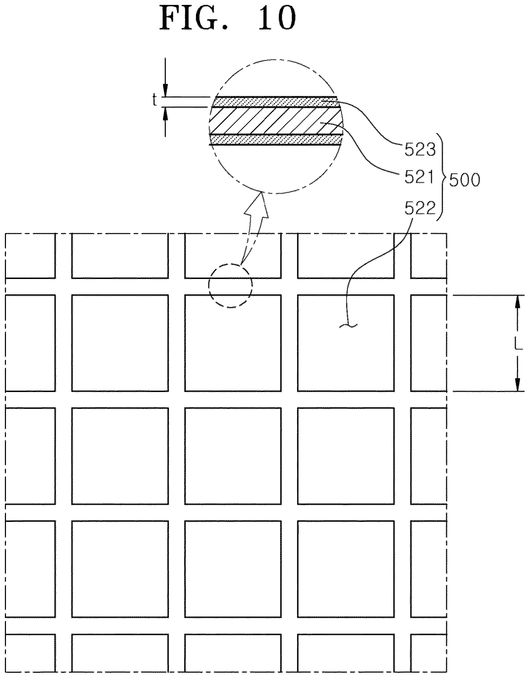

FIG. 7 is a perspective view schematically illustrating the configuration of the energy storage system according to the second embodiment of the present disclosure, FIG. 8 is a front view schematically illustrating the configuration of the energy storage system according to the second embodiment of the present disclosure, FIG. 9 is a perspective view schematically illustrating a configuration of a blocking member according to the second embodiment of the present disclosure, and FIG. 10 is an enlarged view schematically illustrating the configuration of the blocking member according to the second embodiment of the present disclosure.

Referring to FIGS. 7 to 9, the energy storage system according to the present embodiment includes a container 100, an accommodation portion 200, at least one partition 300, at least one ventilation hole 400, and at least one blocking member 500.

The energy storage system according to the second embodiment of the present disclosure may be configured to differ only in a detailed configuration of the blocking member 500 from the energy storage system according to the first embodiment of the present disclosure.

Accordingly, in describing the energy storage system according to the second embodiment of the present disclosure, only the detailed configuration of the blocking member 500 that was not described in the description of the energy storage system according to the first embodiment of the present disclosure will be described.

The description of the energy storage system according to the first embodiment of the present disclosure may be directly applied to the remaining components of the energy storage system according to the second embodiment of the present disclosure.

FIG. 9 illustrates an embodiment in which the ventilation hole 400 extends continuously along an edge of the partition 300, but the shape of the ventilation hole 400 is not limited to thereto, and the ventilation hole 400 may have any other suitable configuration, such as being positioned in a central portion (or substantially a central portion) of the partition 300, as a plurality of ventilation holes 400 in different positions of the partition 300, or the like.

The blocking member 500 according to the present embodiment may include a blocking body 521 and a coating layer 523.

The blocking body 521 is fixed to the partition 300 and faces the ventilation hole 400. The blocking body 521 may be inserted into the ventilation hole 400 and be fixed to an inner surface of the partition 300 whose peripheral surface surrounds the ventilation hole 400. The shape and area of blocking body 521 may correspond to the shape and area of the ventilation hole 400.

A plurality of mesh holes 522 in communication with the ventilation hole 400 may be in the blocking body 521. Both sides of the mesh hole 522 may connect with adjacent accommodation portions 200 through the ventilation hole 400. The plurality of mesh holes 522 may be spaced apart from each other and form a lattice shape. Accordingly, the blocking body 521 may have the shape of a mesh network in which a plurality of linear members crossing each other in a lattice shape. The cross-sectional shape of the mesh hole 522 may have any other suitable shape, such as a circular shape or the like in addition to a quadrilateral shape illustrated in FIG. 10.

The coating layer 523 is on a surface of the blocking body 521 and is configured to open or close the mesh holes 522 in response to temperature changes. In response to the coating layer 523 being heated to a set temperature or higher, the coating layer 523 may be configured to expand in volume and close the mesh holes 522. Accordingly, the coating layer 523 may maintain the mesh hole 522 in an open state in normal operating conditions and allow the air to flow through the ventilation hole 400, and may close the mesh hole 522 in the event of a fire to restrict (or at least mitigate) a flame or smoke from passing through the ventilation hole 400. The coating layer 523 according to the present embodiment may include a foamable fire-resistant paint configured to form an insulating layer that expands several to tens of times as a dry coating film carbonizes in response to being exposed to heat. The set temperature may be any suitable temperature within a range of temperatures that can expand the coating layer 523 in response to a fire occurring in one of the accommodation portions 200.

The coating layer 523 may surround a perimeter of the mesh hole 522. That is, the coating layer 523 may continuously extend along a boundary between the blocking body 521 and the mesh hole 522.

In one or more embodiments, a width L of the mesh hole 522 may satisfy Expression 1 below.

Expression 1

$$L \leq t \times \alpha \times 2$$

in which L denotes the width of the mesh hole 522, and may be a distance between facing sides in an embodiment in which the mesh hole 522 has a polygonal shape or a diameter of the mesh hole 522 in an embodiment in which the mesh hole 522 has a circular shape; t denotes a thickness of the coating layer 523 and may be a distance between inner and outer diameters of the coating layer 523 applied to the blocking body 521; a denotes a minimum expansion rate of the coating layer 523 and may be a value obtained by dividing the smallest expandable volume of the coating layer 523 by an initial volume of the coating layer 523 when the coating layer 523 is heated to the set temperature or higher. The minimum expansion rate $\alpha$ of the coating layer 523 may have any suitable value depending on the type and ratio of the foamable fire-resistant paint contained therein.

Referring to Expression 1, the width L of the mesh hole 522 may be smaller than or equal to a value obtained by multiplying a minimum expandable thickness of the coating layer 523 by two. Accordingly, the coating layer 523 may completely close the mesh hole 522 even when the coating layer 523 expands to the smallest volume in the event of a fire.

Hereinafter, an operation of the energy storage system according to the second embodiment of the present disclosure will be described.

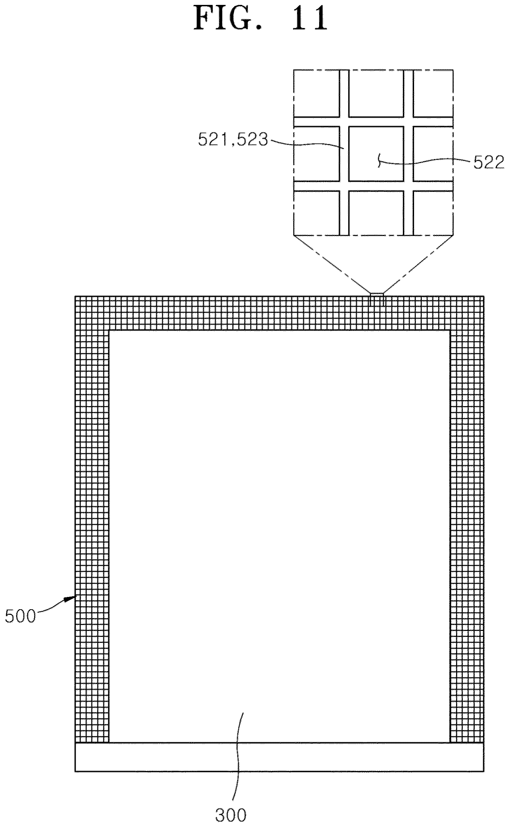

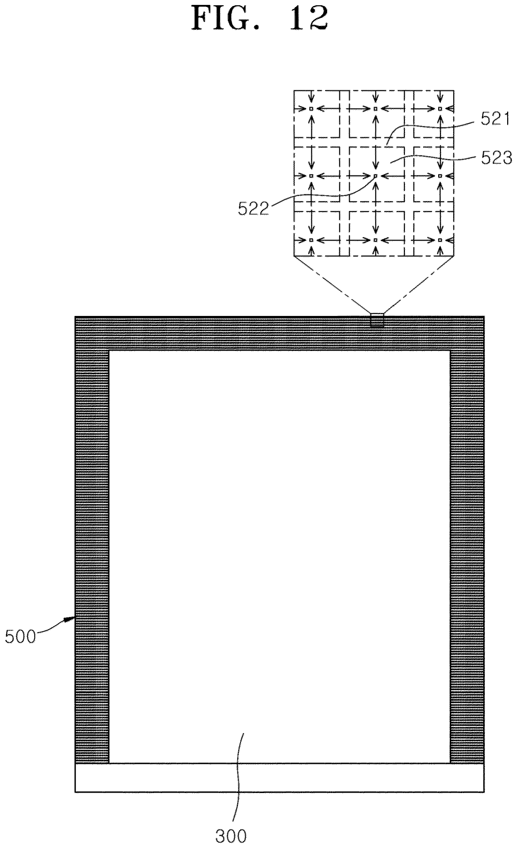

FIGS. 11 and 12 are views schematically illustrating the operation process of the energy storage system according to the second embodiment of the present disclosure.

Referring to FIG. 11, in response to a fire not occurring (i.e., in normal operating conditions), the volume of the coating layer 523 applied to the surface of the blocking body 521 is maintained at its initial volume, and the mesh hole 522 is maintained in an open state.

Accordingly, the air flowing inside any one accommodation portion 200 may receive a flow force from the air conditioner 20 to pass through the ventilation hole 400 and through the mesh holes 522, and may be transmitted to the inside of the adjacent accommodation portions 200.

Referring to FIG. 12, in response to a fire occurring in any one of the accommodation portions 200 due to a malfunction of the battery rack 10 or the air conditioner 20, the temperature of the coating layer 523 increases.

In response to the coating layer 523 being heated to the set temperature or higher, the coating layer 523 surrounding the perimeter of each of the mesh holes 522 expands in volume and closes the mesh holes 522.

When the mesh holes 522 are completely closed, the ventilation hole 400 is separated from the accommodation portion 200 and the spread of fire through the ventilation holes 400 is blocked (or at least mitigated).

Hereinafter, a configuration of an energy storage system according to a third embodiment of the present disclosure will be described.

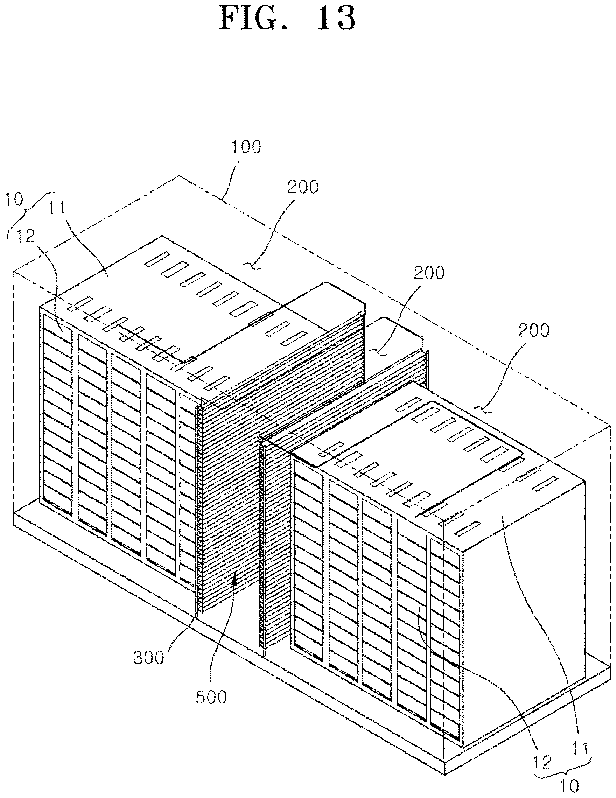

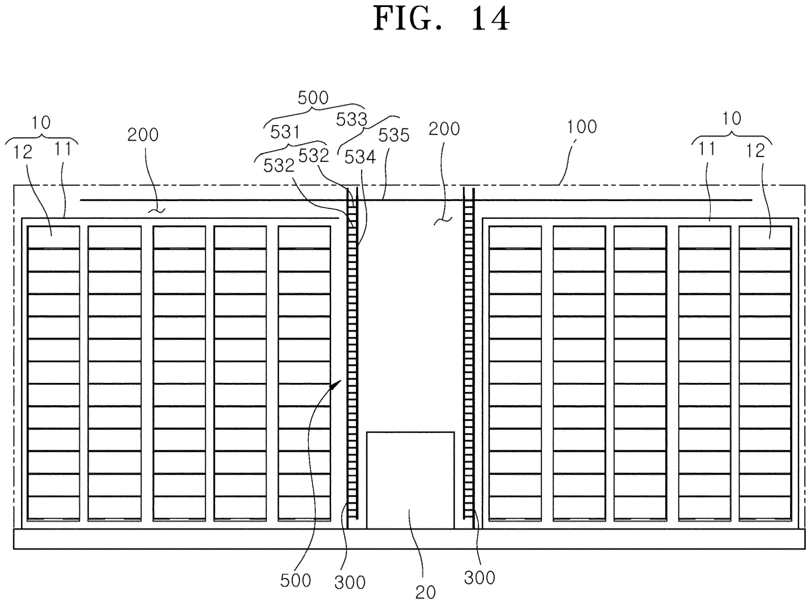

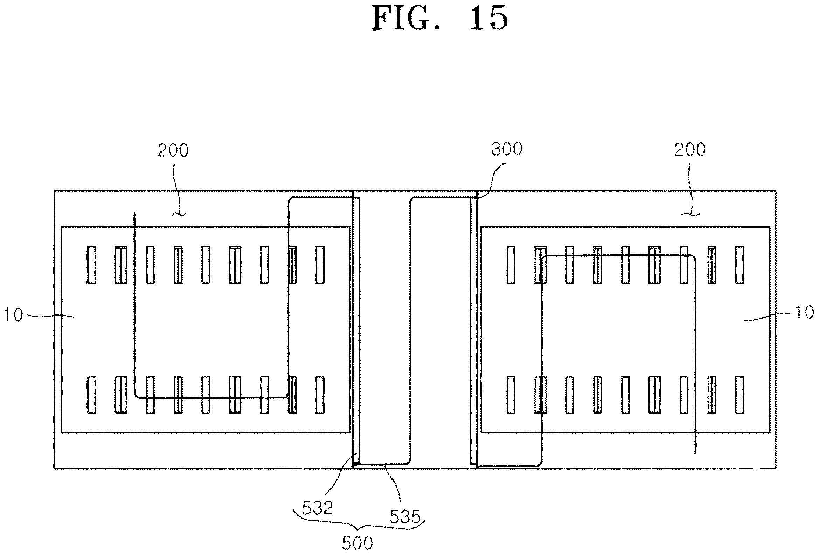

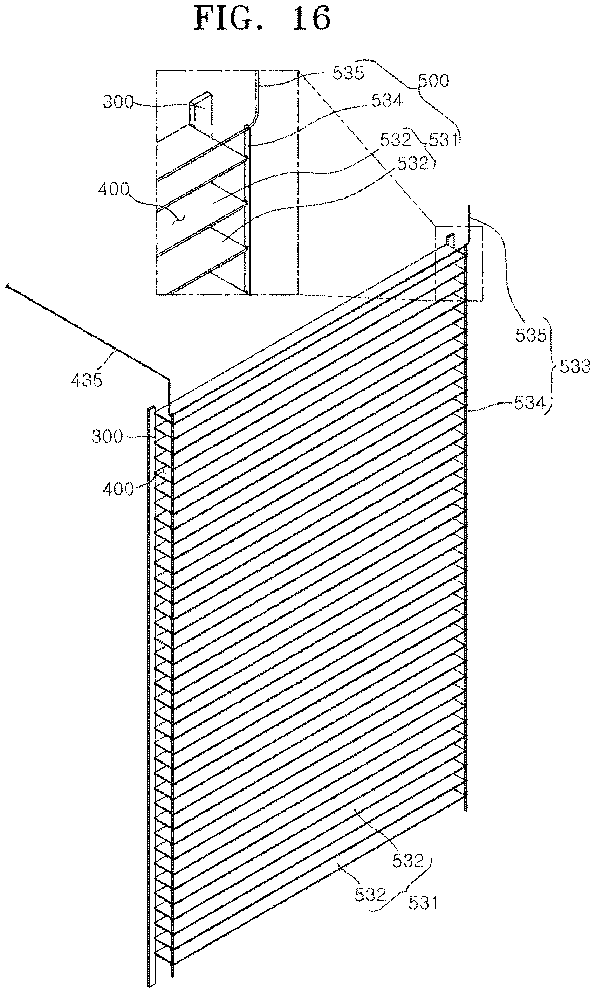

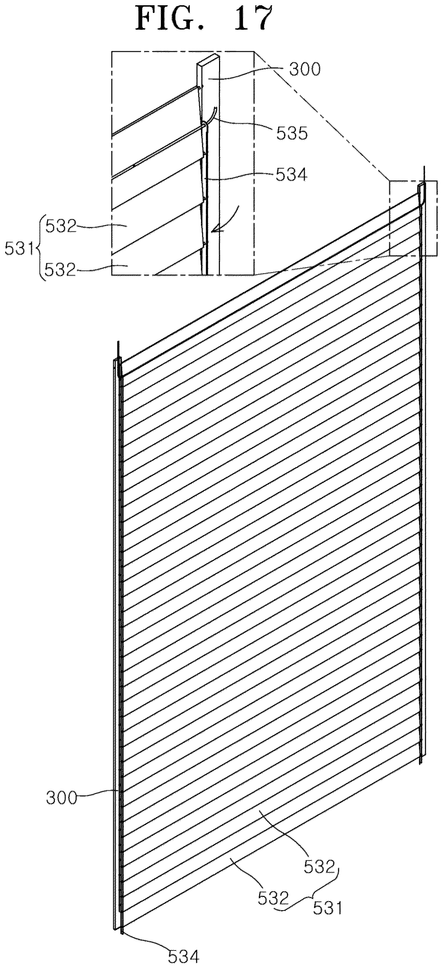

FIG. 13 is a perspective view schematically illustrating the configuration of the energy storage system according to the third embodiment of the present disclosure, FIG. 14 is a front view schematically illustrating the configuration of the energy storage system according to the third embodiment of the present disclosure, FIG. 15 is a plan view schematically illustrating the configuration of the energy storage system according to the third embodiment of the present disclosure, FIG. 16 is a perspective view schematically illustrating a configuration of a blocking member according to the third embodiment of the present disclosure, and FIG. 17 is a perspective view illustrating a state in which a ventilation hole is closed by the blocking member of FIG. 16.

Referring to FIGS. 13 to 17, the energy storage system according to the present embodiment includes a container 100, accommodation portions 200, at least one partition 300, at least one ventilation hole 400, and at least one blocking member 500.

The energy storage system according to the third embodiment of the present disclosure may be configured to differ only in a detailed configuration of the blocking member 500 from the energy storage system according to the first embodiment of the present disclosure.

Accordingly, in describing the energy storage system according to the third embodiment of the present disclosure, only the detailed configuration of the blocking member 500 that was not described in the energy storage system according to the first embodiment of the present disclosure will be described.

The description of the energy storage system according to the first embodiment of the present disclosure may be directly applied to the remaining components of the energy storage system according to the third embodiment of the present disclosure.

The blocking member 500 according to the present embodiment may include a damper member 531 and an adjustment member 533.

Hereinafter, as illustrated in FIGS. 16 and 17, an embodiment in which the ventilation hole 400 passes through all regions except both end portions of the partition 300 will be described.

The damper member 531 is rotatably connected to the partition 300 and opens or closes the ventilation hole 400 according to a rotation direction in which the damper member 531 is rotated. In one or more embodiments, the damper member 531 may close the ventilation hole 400 by being rotated in a first direction, and open the ventilation hole 400 by being rotated in a second direction opposite to the first direction. Here, the first direction may be a clockwise or counterclockwise direction around a rotation axis of the damper member 531.

The damper member 531 according to the present embodiment may include a plurality of dampers 532.

The damper 532 may have a flat plate shape. A longitudinal direction of the damper 532 may be parallel (or substantially parallel) to a bottom surface of the container 100. Both sides of the damper 532 in the longitudinal direction may be rotatably connected to the partition 300 through a rotation axis. A width direction of the damper 532 is perpendicular (or substantially parallel) to the ventilation hole 400 so that the damper 532 may open the ventilation hole 400. The damper 532 may be rotated in the first direction (clockwise based on FIG. 16), and thus the damper 532 may have an inner surface facing the ventilation hole 400 and thus closing the ventilation hole 400.

The damper 532 may include a plurality of dampers 532. The plurality of dampers 532 may be spaced a predetermined interval from each other in a vertical direction. The sum of areas of the plurality of dampers 532 may be greater than an area of the ventilation hole 400. In one or more embodiments, some areas of a pair of adjacent dampers 532 may overlap each other when closing the ventilation hole 400. Accordingly, when the plurality of dampers 532 are fully rotated in the first direction (e.g., clockwise in FIG. 16), the plurality of dampers 532 may close the ventilation hole 400 without any gaps.

Fire-resistant paint may be applied to surfaces of the dampers 532 to prevent (or at least mitigate) damage caused by heat in the event of a fire.

The adjustment member 533 is connected to the damper member 531 and is configured to selectively allow the damper member 531 to be rotated in the first direction in response to temperature changes. That is, in response to there being no temperature change, the adjustment member 533 may restrict rotation of the damper member 531 in the first direction so that the ventilation hole 400 is maintained in an open state. Further, in response the adjustment member 533 being heated to the set temperature or higher (e.g., by a flame or the like), the adjustment member 533 may allow the damper member 531 to be rotated in the first direction so that the ventilation hole 400 is closed.

The adjustment member 533 according to the present embodiment may include a rod 534 and a rope 535.

The rod 534 is connected to the damper member 531 and applies a rotational force to the damper member 531 in the first direction. In response to no external force being applied to the damper member 531, the rod 534 may rotate the damper member 531 in the first direction under its own weight.

The rod 534 according to the present embodiment may be formed to have substantially a bar shape. The rod 534 may be integrally coupled to an edge surface of the damper 532 by welding, bolting, etc. The plurality of dampers 532 may be arranged in a longitudinal direction of the rod 534. The respective dampers 532 may be coupled to different positions of the rod 534 in the longitudinal direction of the rod 534. Accordingly, the rod 534 may synchronize operation of the plurality of dampers 532, that is, a rotation speed, a rotation direction, a rotation angle, etc. of the plurality of dampers 532. The rod 534 may be provided as a pair of rods 534. The pair of rods 534 may be spaced apart from each other in the longitudinal direction of the damper 532 and may be coupled to both sides of the damper 532 in the longitudinal direction.

The rope 535 is connected to the container 100 and the rod 534, and applies a rotational force to the damper member 531 in a second direction opposite to the first direction. That is, the rope 535 may function as a component that offsets the rotational force in the first direction applied by the weight of the rod 534 to the damper member 531 due to the tension on the rope 535. Accordingly, in response to a fire not occurring, the damper member 531 may maintain the ventilation hole 400 in an open state.

In response to the rope 535 being heated to the set temperature or higher due to the contact with the flame or smoke, the rope 535 may be cut. Accordingly, the rope 535 may release the rotational force acting on the damper member 531 in the second direction opposite to the first direction and guide the damper member 531 to be rotated in the first direction in the event of a fire. The set temperature may be any suitable temperature within a range of the temperatures that can cut the rope 535 in response to a fire occurring in the accommodation portion 200.

The rope 535 may be above the accommodation portion 200 in which relatively high temperature air, smoke, etc., are concentrated due to convection in the event of a fire. In one or more embodiments, the rope 535 may be supported on a ceiling surface of the container 100 by a clamp (not illustrated) or the like. Accordingly, the rope 535 may be rapidly cut even when the rope 535 does not come into direct contact with the flame due to the volume of the accommodation portion 200 itself.

The rope 535 may pass through an upper end portion of the rod 534 and both sides thereof may be inside the adjacent accommodation portions 200. Accordingly, it is possible to cause the rope 535 to be cut by a fire occurring in only any one of the pair of adjacent accommodation portions 200.

Ropes 535 provided on different blocking members 500 may be connected to each other. In the embodiment illustrated in FIG. 15, when three accommodation portions 200 are arranged in a row, a pair of blocking members 500 that individually open or close ventilation holes 400 formed in different partitions 300 may be individually installed on both sides of the accommodation portion 200 in the center of the three accommodation portions 200. Both sides of the rope 535 provided in each blocking member 500 may be inside the adjacent accommodation portions 200, and thus one end portions of the ropes 535 provided on different blocking members 500 may be simultaneously inside the accommodation portion 200 in the center, and may be connected to each other. Accordingly, in response to a fire occurs in any one of the plurality of accommodation portions 200, a plurality of blocking members 500 may simultaneously close the ventilation holes 400 formed in different partitions 300.

Hereinafter, an operation of the energy storage system according to the third embodiment of the present disclosure will be described.

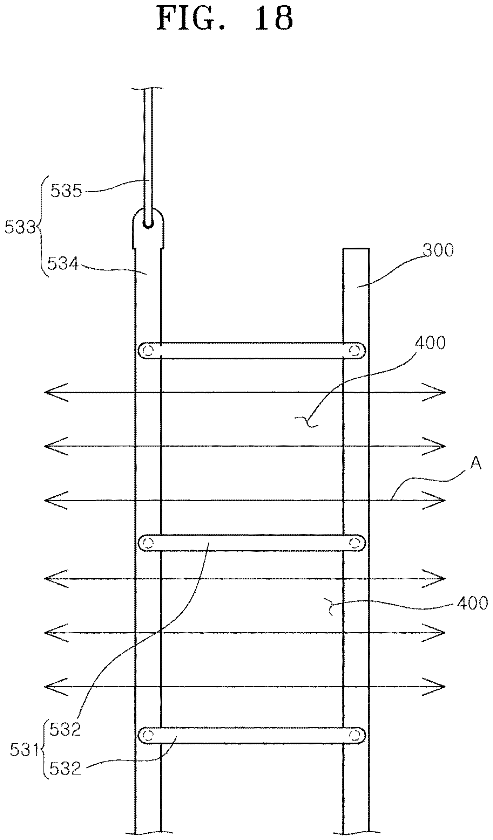

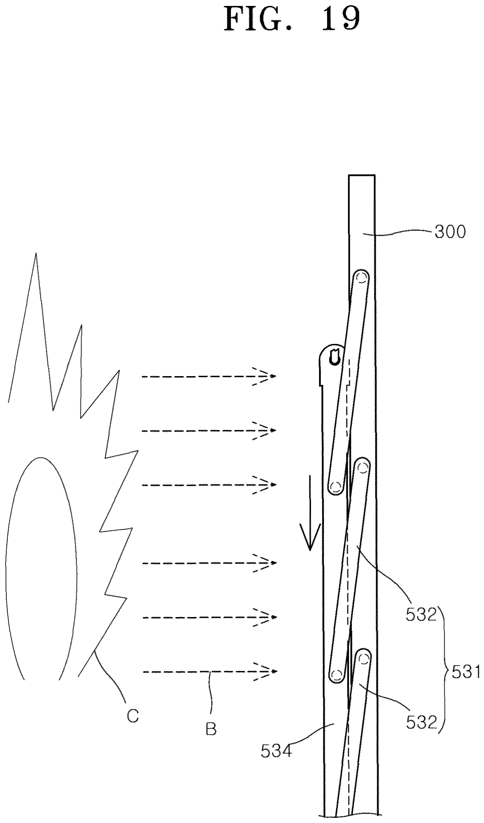

FIGS. 18 and 19 are views schematically illustrating the operation process of the energy storage system according to the third embodiment of the present disclosure.

Referring to FIG. 18, in response to a fire not occurring, the rotational force applied by the rod 534 to the damper 532 in the first direction is offset by the tension of the rope 535 in the second direction different (e.g., opposite) than the first direction.

Accordingly, the damper 532 is maintained in a state in which the width direction thereof is perpendicular (or substantially perpendicular) to the ventilation hole 400, and the ventilation hole 400 is maintained in an open state.

Since the ventilation hole 400 is maintained in an open state, the air A flowing inside any one accommodation portion 200 may receive a flow force from the air conditioner 20 and thus the air A may be transmitted to the inside of the adjacent accommodation portions 200 through the ventilation hole 400.

Referring to FIG. 19, in response to a fire occurring in any one accommodation portion 200 due to a malfunction of the battery rack 10 or the air conditioner 20, a flame C or smoke B comes into contact with the rope 535 and the temperature of the rope 535 increases.

Thereafter, in response to the rope 535 being heated to a set temperature or higher, the rope 535 is cut.

In response to the rope 535 being cut, the tension applied by the rope 535 to the damper 532 is released, and the damper 532 is rotated in the first direction due to the weight of the rod 534.

Rotation of the damper 532 in the first direction closes the ventilation hole 400.

When the ventilation hole 400 is completely closed, the flame C and smoke B generated inside the accommodation portion 200 cannot be introduced into the ventilation hole 400, and thereby the spread of fire through the ventilation holes 400 may be blocked.

Hereinafter, a configuration of an energy storage system according to a fourth embodiment of the present disclosure will be described.

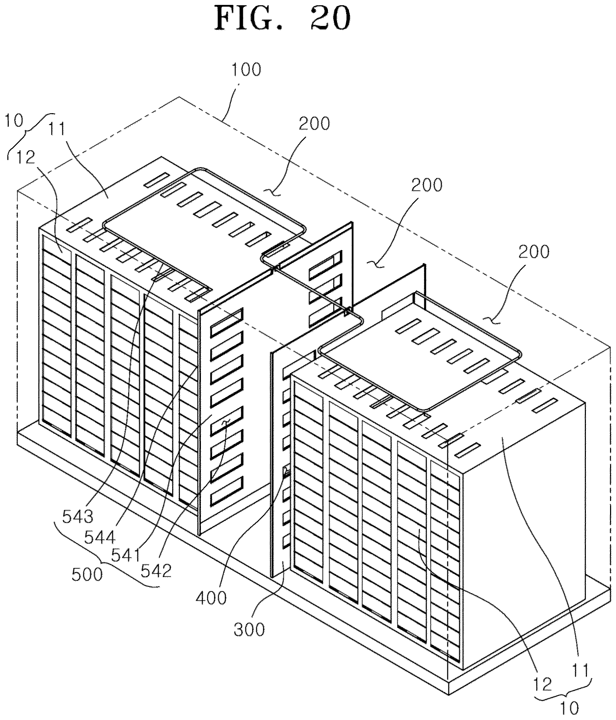

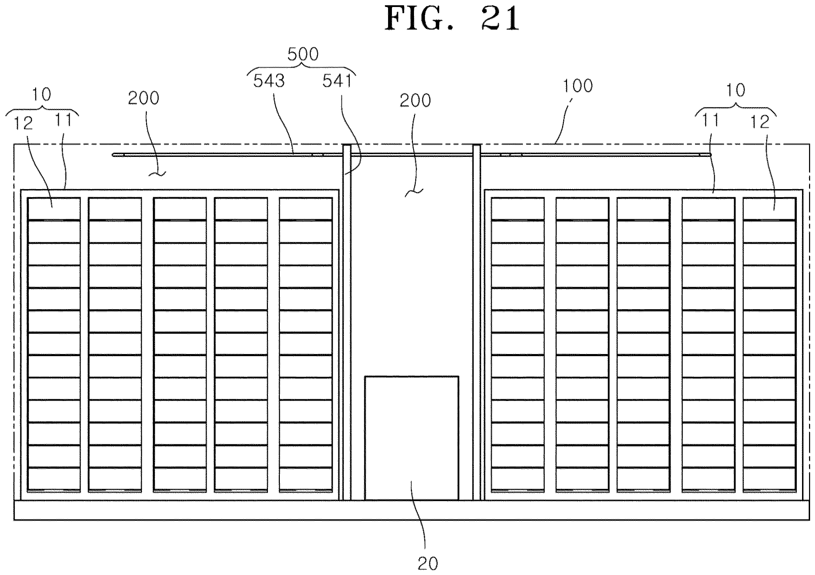

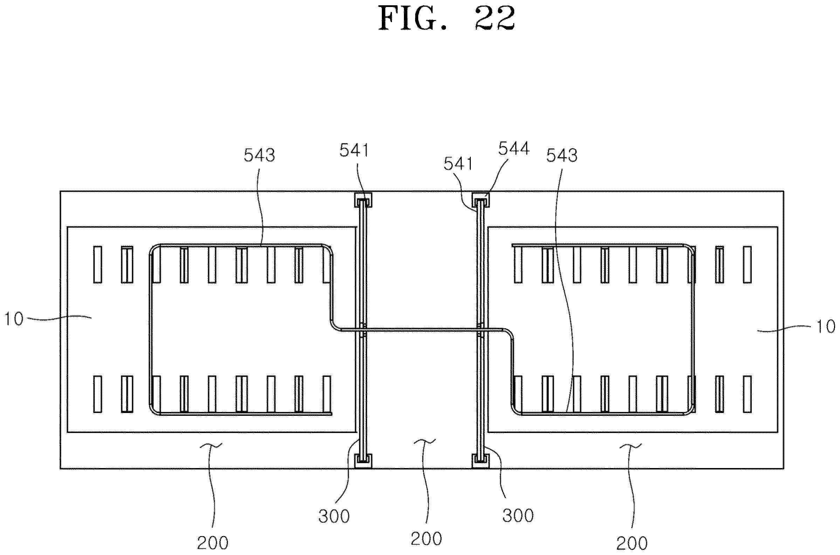

FIG. 20 is a perspective view schematically illustrating the configuration of the energy storage system according to the fourth embodiment of the present disclosure, FIG. 21 is a front view schematically illustrating the configuration of the energy storage system according to the fourth embodiment of the present disclosure, and FIG. 22 is a plan view schematically illustrating the configuration of the energy storage system according to the fourth embodiment of the present disclosure.

Referring to FIGS. 20 to 22, the energy storage system according to the present embodiment includes a container 100, at least one accommodation portion 200, at least one partition 300, at least one ventilation hole 400, and at least one blocking member 500.

The energy storage system according to the fourth embodiment of the present disclosure may be configured to differ only in a detailed configuration of the blocking member 500 from the energy storage system according to the first embodiment of the present disclosure.

Accordingly, in describing the energy storage system according to the fourth embodiment of the present disclosure, only the detailed configuration of the blocking member 500 that was not described in the energy storage system according to the first embodiment of the present disclosure will be described.

The description of the energy storage system according to the first embodiment of the present disclosure may be directly applied to the remaining components of the energy storage system according to the fourth embodiment of the present disclosure.

Referring to FIGS. 20 to 22, the blocking member 500 according to the present embodiment may include a movable partition 541, a movable hole 542, and a rope 543.

The movable partition 541 faces the partition 300 and is movable between a first position and a second position.

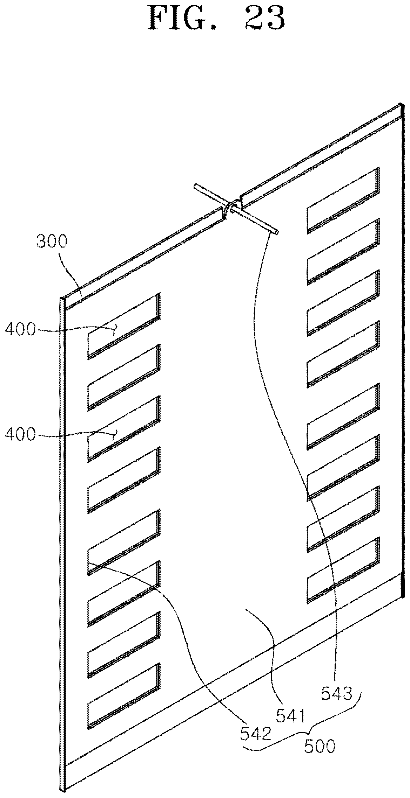

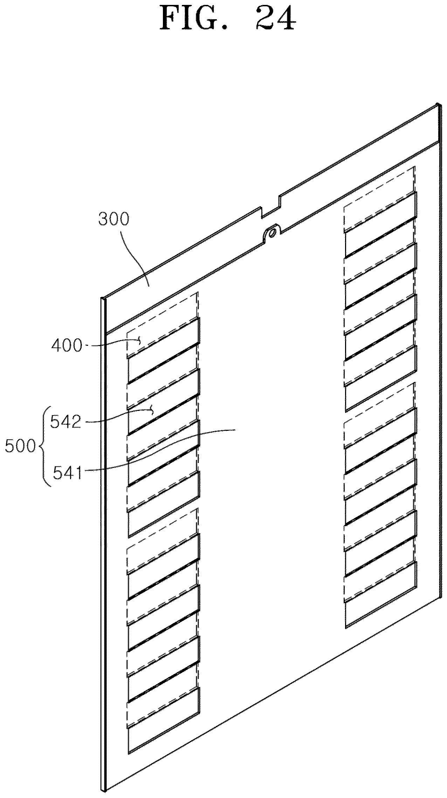

FIG. 23 is a perspective view schematically illustrating a state in which the movable partition according to the fourth embodiment of the present disclosure is in a first position, and FIG. 24 is a perspective view schematically illustrating a state in which the movable partition according to the fourth embodiment of the present disclosure is in a second position.

Referring to FIGS. 20 to 24, the movable partition 541 according to the present embodiment may have a substantially flat plate shape and may be parallel (or substantially parallel) to the partition 300. Inner surfaces of the movable partition 541 and the partition 300 may face each other. Fire-resistant paint may be on an outer surface of the movable partition 541 to prevent (or at least mitigate) damage caused by heat in the event of a fire.

The movable partition 541 may be configured to move up and down in a direction perpendicular (or substantially perpendicular) to a bottom surface of the container 100. In one or more embodiments, a height of the movable partition 541 may be smaller than a height of the partition 300. A state in which the movable partition 541 is positioned in the second position may be a state in which the movable partition 541 is completely lowered and in contact with the bottom surface of the container 100. Further, a state in which the movable partition 541 is positioned in the first position may be a state in which the movable partition 541 is raised to a predetermined height above the second position. In response to no separate external force being applied, the movable partition 541 may be positioned in the second position by its own weight.

The movable hole 542 passes through the movable partition 541 and selectively connects (e.g., aligns) with the ventilation hole 400 in conjunction with the movement of the movable partition 541. In response to the movable partition 541 being positioned in the first position, the movable hole 542 may face the ventilation hole 400 and, in conjunction with the ventilation hole 400, allow the movement of the air through the ventilation hole 400. When the movable partition 541 is positioned in the second position, the movable hole 542 may be misaligned with the ventilation hole 400 and may thereby block (or at least mitigate) the movement of the air, a flame, or smoke through the ventilation hole 400.

The movable hole 542 may include a plurality of movable holes 542. When the movable partition 541 is positioned in the first position, the plurality of movable holes 542 may face the plurality of ventilation holes 400. The movable hole 542 may have a shape corresponding (e.g., matching or substantially matching) to the shape of the ventilation hole 400.

The rope 543 is connected to the container 100 and the movable partition 541 and is configured to selectively allow the movable partition 541 to be moved from the first position to the second position in response to temperature changes.

In response to there being no temperature change, the rope 543 may function as a component that positions the movable partition 541 in the first position by offsetting the weight of the movable partition 541 by its own tension. Accordingly, in response to a fire not occurring, the ventilation hole 400 may be maintained in an open state.

Further, in response to the rope 543 being heated to a set temperature or higher by a flame or the like, the rope 543 may be cut. Accordingly, the rope 543 releases the tension applied to the movable partition 541 in the event of a fire, thereby causing the movable partition 541 to move to the second position by its own weight and closes the ventilation hole 400. The set temperature may be any suitable temperature a range of the temperatures that can cut the rope 543 in response to a fire occurring in the accommodation portion 200.

The rope 543 may be above the accommodation portion 200 in which relatively high temperature air, smoke, etc., are concentrated due to convection in the event of a fire. In one or more embodiments, the rope 535 may be supported on a ceiling surface of the container 100 by a clamp or the like. Accordingly, the rope 535 may be rapidly cut even in a situation where the rope 535 does not come into direct contact with the flame due to the volume of the accommodation portion 200 itself.

The rope 543 may pass through an upper end portion of the movable partition 541 and both sides thereof may be inside adjacent accommodation portions 200. Accordingly, it is possible to cut the rope 543 by a fire occurring only in any one of the pair of adjacent accommodation portions 200.

Ropes 543 provided on different blocking members 500 may be connected to each other. In the embodiment illustrated in FIG. 22, when three accommodation portions 200 are arranged in a row, a pair of blocking members 500 that individually open or close the ventilation holes 400 formed in different partitions 300 may be individually installed on both sides of the accommodation portion 200 disposed in the center of the three accommodation portions 200. Both sides of the rope 543 in each blocking member 500 may be inside the adjacent accommodation portions 200, and thus one end portions of the ropes 543 provided on different blocking members 500 may be simultaneously inside the accommodation portion 200 in the center, and may be connected to each other. Accordingly, in response to a fire occurring in any one of the plurality of accommodation portions 200, a plurality of blocking members 500 may simultaneously close the ventilation holes 400 in different partitions 300.

The blocking member 500 according to the present embodiment may further include a guide rail 544 that guides the movement of the movable partition 541. The guide rail 544 may be provided as a pair of guide rails 544. The pair of guide rails 544 may be on both sides of the partition 300 and the movable partition 541.

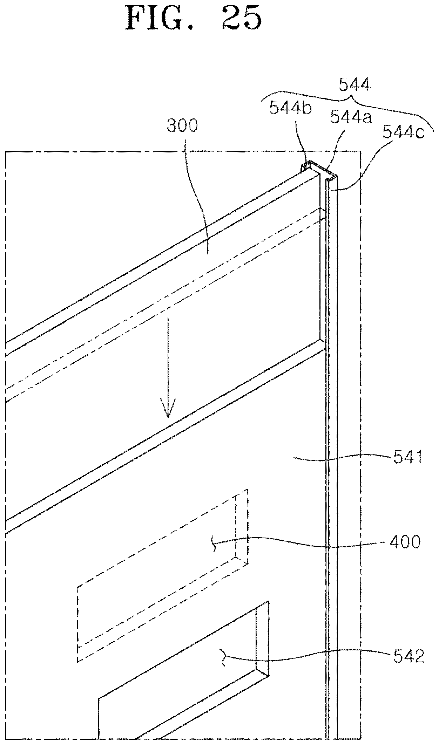

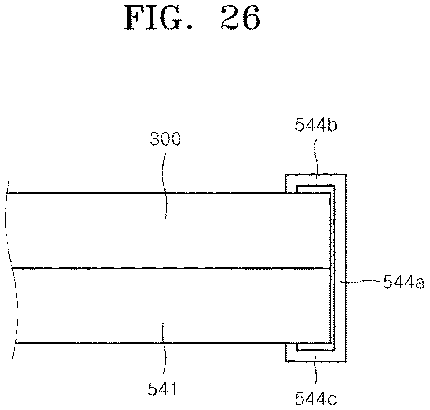

FIG. 25 is an enlarged view schematically illustrating a configuration of a guide rail according to the fourth embodiment of the present disclosure, and FIG. 26 is a cross-sectional view schematically illustrating the configuration of the guide rail according to the fourth embodiment of the present disclosure.

Referring to FIGS. 20 to 26, the guide rail 544 according to the present embodiment may include a guide body 544a, a first extension portion 544b, and a second extension portion 544c.

The guide body 544a is fixed to the container 100 and supports the first extension portion 544b and the second extension portion 544c, which will be described below. The guide body 544a according to the present embodiment may have a flat pillar shape. Upper and lower end portions of the guide body 544a may be fixed to a ceiling and bottom surfaces of the container 100, respectively. The guide body 544a may be perpendicular (or substantially perpendicular) to the partition 300 and the movable partition 541. An inner surface of the guide body 544a may face side surfaces of the partition 300 and the movable partition 541.

The first extension portion 544b may extend from one end portion of the guide body 544a and may face an outer surface of the partition 300. The first extension portion 544b may be fixed to the outer surface of the partition 300 by welding, bolting, etc.

The second extension portion 544c extends from the other end portion of the guide body 544a and faces an outer surface of the movable partition 541. The outer surface of the movable partition 541 may be slidably in contact with the second extension portion 544c. Accordingly, a relative angle and distance of the movable partition 541 with respect to the partition 300 may be maintained constant (or substantially constant) while being moved to the first and second positions.

Hereinafter, an operation of the energy storage system according to the fourth embodiment of the present disclosure will be described.

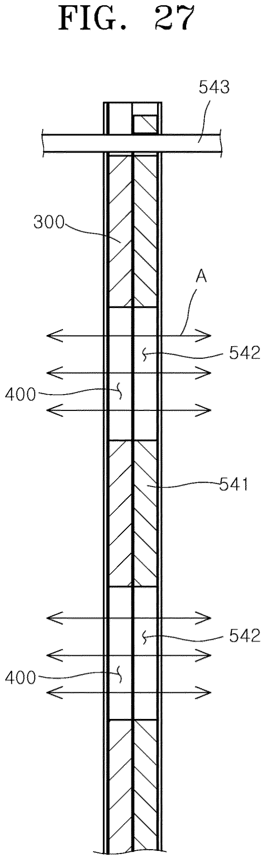

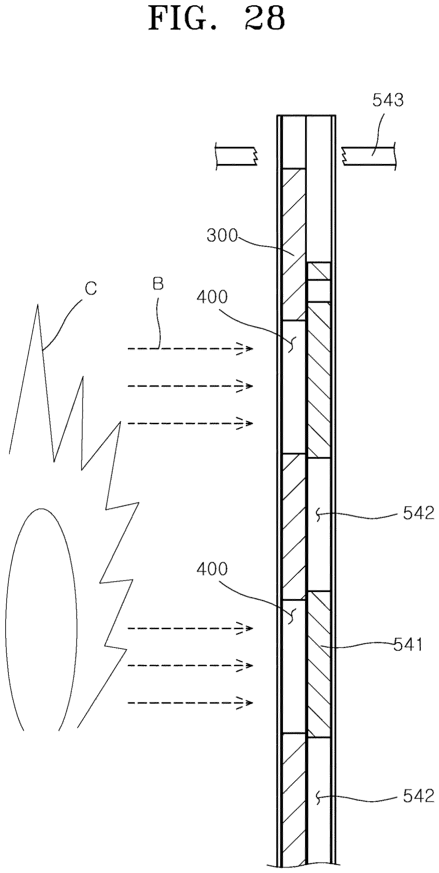

FIGS. 27 and 28 are views schematically illustrating the operation process of the energy storage system according to the fourth embodiment of the present disclosure.

Referring to FIG. 27, in response to a fire not occurring, the tension caused by the rope 543 offsets the weight of the movable partition 541, and thus the movable partition 541 is maintained in the first position.

Accordingly, the movable hole 542 faces (e.g., is aligned with) the ventilation hole 400 and the ventilation hole 400 is maintained in an open state.

When the ventilation hole 400 is maintained in an open state, the air A flowing inside any one accommodation portion 200 may receive a flow force from the air conditioner 20 and thus the air A may be transmitted to the inside of the adjacent accommodation portions 200 through the ventilation holes 400.

Referring to FIG. 28, in response to a fire occurring in any one accommodation portions 200 due to a malfunction of the battery rack 10 or the air conditioner 20, a flame C or smoke B comes into contact with the rope 543 and the temperature of the rope 543 increases.

Thereafter, in response to the rope 543 being heated to a set temperature or higher, the rope 543 is cut.

In response to the rope 543 being cut, the tension applied by the rope 543 to the movable partition 541 is released, and the movable partition 541 is moved to the second position under its own weight.

In response to the movable partition 541 being moved to the second position, the movable hole 542 is misaligned with the ventilation hole 400 and the ventilation hole 400 is closed.

When the ventilation hole 400 is completely closed, the flame C and smoke B generated inside the accommodation portion 200 cannot be introduced into the ventilation holes 400, and thus the spread of fire through the ventilation holes 400 may be blocked (or at least mitigated).

According to the present disclosure, by allowing the air inside any one accommodation portion to be transmitted to adjacent accommodation portions through ventilation holes in normal operating conditions, the internal environment of a plurality of accommodation portions can be uniformly maintained.

According to the present disclosure, by blocking a flame or smoke generated in any one accommodation portion from being transmitted to adjacent accommodation portions through ventilation holes in the event of a fire, it is possible to prevent the fire from spreading to the entire region of a container.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

**Claims**

1. An energy storage system comprising:

   a container;
   a plurality of accommodation portions inside the container, each of the plurality of accommodation portions accommodating or configured to accommodate a battery rack or an air conditioner;
   a partition between adjacent accommodation portions of the plurality of accommodation portions;
   a ventilation hole passing through the partition and connecting the adjacent accommodation portions; and
   a blocking member configured to block a flame or smoke generated in one of the adjacent accommodation portions from passing through the ventilation hole.

2. The energy storage system as claimed in claim 1, wherein the blocking member comprises at least one louver extending from the partition and facing the ventilation hole.

3. The energy storage system as claimed in claim 2, wherein the at least one louver is inclined with respect to the partition.

4. The energy storage system as claimed in claim 3, wherein the at least one louver extends upwardly from a lower side of the ventilation hole and a distance from the at least one louver to the ventilation hole increases toward an end portion of the at least one louver.

5. The energy storage system as claimed in claim 1, wherein the blocking member comprises:

   a blocking body fixed to the partition and comprising a plurality of mesh holes connected to the ventilation hole; and
   a coating layer on a surface of the blocking body, the coating layer being configured to expand in response to being heated to a set temperature or higher and to close the plurality of mesh holes.

6. The energy storage system as claimed in claim 5, wherein the coating layer surrounds perimeters of the plurality of mesh holes.

7. The energy storage system as claimed in claim 6, wherein a width of a mesh hole of the plurality of mesh holes satisfies Expression 1 below:

Expression 1

$$L \leq t \times \alpha \times 2$$

   wherein L denotes a width of the mesh hole, t denotes a thickness of the coating layer, and $\alpha$ denotes a minimum expansion rate of the coating layer.

8. The energy storage system as claimed in claim 1, wherein the blocking member comprises:

   a damper member rotatably connected to the partition, the damper member being configured to close the ventilation hole by being rotated in a first direction; and
   an adjustment member connected to the damper member and configured to selectively allow the damper member to be rotated in the first direction in response to temperature changes.

9. The energy storage system as claimed in claim 8, wherein the adjustment member comprises:

a rod connected to the damper member and configured to apply a rotational force to the damper member in the first direction; and

a rope connected to the container and the rod, the rope being configured to apply a rotational force to the damper member in a direction opposite to the first direction, and

wherein the rope is configured to be cut in response to the rope being heated to a set temperature or higher.

10. The energy storage system as claimed in claim 9, wherein the rope is above the adjacent accommodation portions.

11. The energy storage system as claimed in claim 9 or 10, wherein the rope passes through the rod and wherein both sides of the rope are inside the adjacent accommodation portions.

12. The energy storage system as claimed in claim 9, 10 or 11, wherein the partition comprises a plurality of partitions, wherein the blocking member comprises a plurality of blocking members, wherein the rope comprises a plurality of ropes, and wherein the plurality of ropes provided in different blocking members are connected to each other.

13. The energy storage system as claimed in claim 1, wherein the blocking member comprises:

a movable partition facing the partition and movably arranged between a first position and a second position;

a movable hole passing through the movable partition and facing the ventilation hole in response to the movable partition being positioned in the first position; and

a rope configured to allow the movable partition to be positioned in the first position and configured to selectively allow the movable partition to be moved from the first position to the second position in response to temperature changes.

14. The energy storage system as claimed in claim 13, wherein the rope is connected to the container and the movable partition, and wherein the rope is configured to be cut in response to the rope being heated to a set temperature or higher.

15. The energy storage system as claimed in claim 13 or 14, wherein the blocking member further comprises a guide rail configured to guide movement of the movable partition.

# FIG. 1

# FIG. 2

EP 4 589 727 A1

# FIG. 3

# FIG. 4

# FIG. 5

# FIG. 6

# FIG. 7

# FIG. 8

EP 4 589 727 A1

# FIG. 9

# FIG. 10

# FIG. 11

# FIG. 12

# FIG. 13

# FIG. 14

# FIG. 15

# FIG. 16

# FIG. 17

# FIG. 18

# FIG. 19

# FIG. 20

# FIG. 21

EP 4 589 727 A1

# FIG. 22

# FIG. 23

# FIG. 24

# FIG. 25

# FIG. 26

# FIG. 27

# FIG. 28

Europäisches
Patentamt

European
Patent Office

Office européen
des brevets

# EUROPEAN SEARCH REPORT

**Application Number**

EP 24 19 7041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 100 351 A (LG CHEMICAL LTD) 6 August 2019 (2019-08-06) | 1 | INV. H01M10/60 |
| A | * abstract; figures * | 2-15 | H01M10/61 H01M10/653 |
| A | CN 115 552 708 A (KAUTEX TEXTRON GMBH & CO KG) 30 December 2022 (2022-12-30) * the whole document * | 1-15 | H01M10/655 H01M10/6557 H01M10/613 H01M50/204 |
| A | AU 2020 246 793 A1 (LG ENERGY SOLUTION LTD [KR]) 6 May 2021 (2021-05-06) * the whole document * | 1-15 | H01M50/209 |
| A | WO 2013/024533 A1 (HITACHI LTD [JP]; TAKEDA KENJI [JP]; TANAKA TOORU [JP]) 21 February 2013 (2013-02-21) * the whole document * | 1-15 | |
| A | KR 102 191 291 B1 (INCELLS CO LTD [KR]) 16 December 2020 (2020-12-16) * the whole document * | 1-15 | |
| A | CN 113 363 644 A (SK INNOVATION CO LTD) 7 September 2021 (2021-09-07) * the whole document * | 1-15 | TECHNICAL FIELDS SEARCHED (IPC) H01M |
| A | AU 2020 300 283 A1 (LG ENERGY SOLUTION LTD [KR]) 23 December 2021 (2021-12-23) * the whole document * | 1-15 | |
| A | EP 4 047 729 A1 (SK ON CO LTD [KR]) 24 August 2022 (2022-08-24) * the whole document * | 1-15 | |

The present search report has been drawn up for all claims

| Place of search | Date of completion of the search | Examiner |
|---|---|---|
| Munich | 23 January 2025 | Paulson, Bo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 7041

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2025

| Patent document cited in search report | | Publication date | Patent family member(s) | | Publication date |
|---|---|---|---|---|---|
| CN 110100351 | A | 06-08-2019 | CN | 110100351 A | 06-08-2019 |
| | | | EP | 3570364 A1 | 20-11-2019 |
| | | | JP | 7037005 B2 | 16-03-2022 |
| | | | JP | 2020513655 A | 14-05-2020 |
| | | | KR | 20180113419 A | 16-10-2018 |
| | | | PL | 3570364 T3 | 19-04-2021 |
| | | | US | 2020067156 A1 | 27-02-2020 |
| | | | WO | 2018186566 A1 | 11-10-2018 |
| CN 115552708 | A | 30-12-2022 | CN | 115552708 A | 30-12-2022 |
| | | | DE | 102020113086 A1 | 18-11-2021 |
| | | | EP | 4150701 A1 | 22-03-2023 |
| | | | US | 2023187774 A1 | 15-06-2023 |
| | | | WO | 2021228954 A1 | 18-11-2021 |
| AU 2020246793 | A1 | 06-05-2021 | AU | 2020246793 A1 | 06-05-2021 |
| | | | CN | 112154552 A | 29-12-2020 |
| | | | EP | 3840082 A1 | 23-06-2021 |
| | | | JP | 7094386 B2 | 01-07-2022 |
| | | | JP | 2021520611 A | 19-08-2021 |
| | | | KR | 20200113500 A | 07-10-2020 |
| | | | US | 2021083344 A1 | 18-03-2021 |
| | | | US | 2024194977 A1 | 13-06-2024 |
| | | | WO | 2020197111 A1 | 01-10-2020 |
| WO 2013024533 | A1 | 21-02-2013 | NONE | | |
| KR 102191291 | B1 | 16-12-2020 | NONE | | |
| CN 113363644 | A | 07-09-2021 | CN | 113363644 A | 07-09-2021 |
| | | | KR | 20210112645 A | 15-09-2021 |
| | | | US | 2021280937 A1 | 09-09-2021 |
| | | | US | 2024363944 A1 | 31-10-2024 |
| AU 2020300283 | A1 | 23-12-2021 | AU | 2020300283 A1 | 23-12-2021 |
| | | | CN | 113939944 A | 14-01-2022 |
| | | | EP | 3965220 A1 | 09-03-2022 |
| | | | ES | 2988558 T3 | 20-11-2024 |
| | | | HU | E067073 T2 | 28-09-2024 |
| | | | JP | 7268188 B2 | 02-05-2023 |
| | | | JP | 2022528227 A | 09-06-2022 |
| | | | KR | 20210004189 A | 13-01-2021 |
| | | | PL | 3965220 T3 | 01-07-2024 |
| | | | US | 2022115737 A1 | 14-04-2022 |
| | | | US | 2024079721 A1 | 07-03-2024 |
| | | | WO | 2021002626 A1 | 07-01-2021 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 19 7041

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2025

| Patent document cited in search report | Publication date | Patent family member(s) | Publication date |
|---|---|---|---|
| EP 4047729 A1 | 24-08-2022 | CN 114976411 A | 30-08-2022 |
| | | EP 4047729 A1 | 24-08-2022 |
| | | KR 20220118063 A | 25-08-2022 |
| | | US 2022263189 A1 | 18-08-2022 |

EPO FORM P0459

For more details about this annex : see Official Journal of the European Patent Office, No. 12/82

page 2 of 2